# EUROPÄISCHE PATENTANMELDUNG

(11) **EP 1 584 649 A1**
(43) Veröffentlichungstag der Anmeldung: **12.10.2005**
(21) Anmeldenummer: 04405191.0
(22) Anmeldetag: 29.03.2004
(51) Int. Cl.: C08K 7/14, B32B 15/08, B32B 17/10, B32B 5/26, B32B 5/28, B32B 5/02, D04H 13/00

(54) **Flächiges Halbzeug aus GMT-Recyclat**

(71) Anmelder: Quadrant IP AG, 6300 Zug (CH)
(72) Erfinder: Brentrup, Karl, 5103 Möriken (CH); Baser, Burak, 4600 Olten (CH)
(74) Vertreter: EGLI-EUROPEAN PATENT ATTORNEYS

(57) **Zusammenfassung**

Die Erfindung betrifft ein flächiges Halbzeug aus mindestens einer Schicht A aus einem thermoplastischen Kunststoff, der mit Fasern in unregelmäßiger Verteilung verstärkt ist, und mindestens einer Schicht B aus einem Fasergewebe, welches mit einem thermoplastischen Kunststoff durchtränkt ist, wobei die Verstärkungsfasern der Schicht A im wesentlichen in zwei Dimensionen angeordnet sind und nicht miteinander verbunden sind.

## Beschreibung

Die Erfindung betrifft ein flächiges Halbzeug, umfassend mindestens eine erste Schicht A aus einem thermoplastischen Kunststoff, der mit Fasern in unregelmäßiger Verteilung verstärkt ist, und mindestens eine zweite Schicht B aus einem Fasergewebe oder Fasergelege, das mit einem thermoplastischen Kunststoff durchtränkt ist.

Bauteile aus faserverstärkten Halbzeugen finden in zunehmendem Maße Anwendung im Automobilbau. Ein gebräuchliches Verfahren zur Herstellung solcher Halbzeuge ist die Schmelzeimprägnierung. Dabei werden mehrere Lagen von Glasfasermatten und Thermoplast-Schmelzebahnen kontinuierlich, vorzugsweise in einer Doppelbandpresse, laminiert und unter Druck abgekühlt. Das entstandene Halbzeug hat die Fachbezeichnung "glasmattenverstärkter Thermoplast" (GMT).

Um ein fließfähiges Halbzeug zu erhalten, werden die Matten genadelt, wobei ein Teil der Fasern senkrecht zur Bahnrichtung orientiert wird und die Fasern miteinander verfilzen. Außerdem wird ein Teil der Fasern zerbrochen. Das Schmelzeimprägnierverfahren ergibt zwar ein hervorragend verarbeitbares Halbzeug, aus dem Fertigteile mit guten mechanischen Eigenschaften hergestellt werden können, es ist technisch aber sehr aufwendig. Außerdem ist die Benetzung der Glasfasern mit dem Thermoplasten recht unvollständig, so dass die Verbindung zwischen Matrix und Fasern zu wünschen übrig lässt. Um diesen Missstand zu beheben, wird in der FR- A 2 749 535 und in WO- A 98/30386 vorgeschlagen, bei der Herstellung des GMT- Halbzeugs zusätzlich Bahnen aus einem Gewebe, das als Faserstränge in Längs- und Querrichtung jeweils eine Fasermischung aus Glasfasern und Thermoplastfasern enthält, zuzuführen und mitzuverpressen. Da die beiden Faserarten im Gewebe sehr eng parallel beieinander liegen, erhält man beim Heißverpressen eine gleichmäßige und praktisch vollständige Durchmischung von Thermoplastmatrix und Verstärkungsfasern.

Bei einem alternativen Verfahren zur Herstellung eines flächigen Halbzeugs werden Endlosglasfasern oder Schnittglasfasern einer Länge von mehr als 50 mm mit einem thermoplastischen Kunststoff zusammen einem Extruder zugeführt, dort vermischt, durch eine Düse ausgepresst und zu einer flächigen Bahn geformt. Dabei erfolgt Faserbruch und man erhält eine breite Faserlängenverteilung. Die Fasern sind hier nicht miteinander in Matten verfilzt, sie sind vielmehr ohne Verbindung miteinander als Einzelindividuen in der Thermoplastmatrix verteilt. Das entstandene Halbzeug hat die Fachbezeichnung "langfaserverstärkter Thermoplast" (LFT). Verfahren zur Herstellung eines solchen Halbzeugs sind z.B. in DE-A 43 30 860, EP- A 844 924 und DE- A 101 05 812 beschrieben.

Bauteile, die aus LFT- Halbzeug durch Heißverpressen und Umformen hergestellt wurden, haben eine verhältnismäßig geringe Biegefestigkeit, außerdem weisen sie eine niedrige Energieaufnahme auf und versagen bei hoher dynamischer Belastung.

Dies ist bei Bauteilen aus GMT- Halbzeug nicht in selbem Maße der Fall, da dort die zusammenhängenden und oftmals längeren Fasern eine höhere Festigkeit bewirken.

Der Erfindung liegt daher die Aufgabe zugrunde, ein flächiges LFT- Halbzeug bereitzustellen, das zu Fertigteilen mit hoher Biegefestigkeit und hoher Energieaufnahme verarbeitet werden kann.

Diese Aufgabe wird erfindungsgemäß durch ein flächiges Halbzeug nach Anspruch 1 gelöst. Dieses Halbzeug umfasst mindestens eine Schicht A aus einem thermoplastischen Kunststoff, der mit Fasern in unregelmäßiger Verteilung verstärkt ist, und mindestens eine Schicht B aus einem Fasergewebe oder Fasergelege, das mit einem thermoplastischen Kunststoff gleichmäßig und praktisch vollständig durchtränkt ist. Die Verstärkungsfasern der Schicht A weisen eine mittlere Länge (Gewichtsmittel) von 5 bis 50 mm, vorzugsweise von 20 bis 30 mm auf, wobei zumindest 5 % der Verstärkungsfasern eine Länge von unter 2 mm (Gewichtsmittel) aufweisen, zumindest 50 % der Verstärkungsfasern eine Länge von über 2 mm (Gewichtsmittel) aufweisen, und höchstens 20 % der Verstärkungsfasern eine Länge von > 50 mm (Gewichtsmittel) aufweisen. Sie sind im wesentlichen nur in zwei Dimensionen angeordnet und sind weder mechanisch noch chemisch miteinander verbunden.

Dabei haben die Massnahmen der Erfindung insbesondere zur Folge, dass das Halbzeug mit den langen Fasern ein hohe Festigkeit aufweist, mit den beigemischten kurzen Fasern aber eine Weiterverarbeitung, insbesondere eine Verjüngung, unterstützt wird. Durch die beiden Schichten A und B kommt dieser Effekt überraschenderweise in besonderem Masse zum Tragen, was sich sowohl bei der Weiterverarbeitung des Halbzeuges wie auch bei deren Eigenschaften besonders auszeichnet. Insofern ist gegenüber der DE A 43 30 860, aus der die Schicht A für sich genommen grundsätzlich schon bekannt ist, ein weiterer vorteilhafter Effekt gelungen.

Als Thermoplasten sind z.B. Polyolefine, Polyamide, gesättigte Polyester, Styrolpolymere, Polycarbonate, Polyethersulfone, Polyetherketone und Polyetherimide geeignet. Bevorzugt sind Propylenpolymerisate mit einem Schmelzindex MFI (2,16 kg/210°C) zwischen 10 und 1000 g/10 min, insbesondere zwischen 50 und 500 g/10 min, vorzugsweise Polypropylen und Copolymerisate des Propylens mit Acrylsäure oder Maleinsäureanhydrid. Die Schichten A und B enthalten bevorzugt den gleichen thermoplastischen Kunststoff. Die Schicht A kann darüber hinaus übliche Zusatzstoffe, wie Stabilisatoren, Treibmittel, Füllstoffe, Farbstoffe und Flammschutzmittel, enthalten.

Geeignete Verstärkungsfasern sind solche aus Glas, Kohlenstoff, Aramid, Stahl sowie Naturfasern. Bevorzugt sind E- Glasfasern mit einem Durchmesser von 10 bis 30 *µ*m. Beide Schichten sollten auch die gleiche Faserart enthalten.

Die Fasern sind im wesentlichen in zwei Dimensionen in einer Ebene angeordnet, d.h. es gibt praktisch keine Fasern, die senkrecht zur Bahnrichtung stehen. Die Fasern sind nicht miteinander mechanisch oder chemisch verbunden, d.h. sie liegen in der Matrix als Einzelindividuen vor.

In der Schicht A legt das Gewichtsverhältnis Thermoplast zu Verstärkungsfasern vorzugsweise zwischen 40:60 und 80:20, in der Schicht B zwischen 20:80 und 60:40. Die Schicht A ist vorzugsweise 1 bis 30 mm dick, die Schicht B 1 bis 5 mm.

Das erfindungsgemäße flächige Halbzeug ist vorzugsweise 2 bis 30 mm, insbesondere 5 bis 20 mm dick; und 5 bis 200 cm, insbesondere 10 bis 50 cm breit.

Eine besonders vorteilhafte Ausführung der vorliegenden Erfindung mit einem eigenen Effekt ist ein Halbzeug mit einer Schicht A-B-A , weil in diesem Fall das so gefertigte Halbzeug zu Fertigteilen mit besonders hoher Biegefestigkeit und hoher Energieaufnahme führt.

Eine andere, besonders vorteilhafte Ausführung der vorliegenden Erfindung mit einem eigenen, gegenüber dem vorstehend beschriebenen aber unterschiedlichen Effekt ist ein Halbzeug mit der B-A-B, wobei in diesem Fall B-A-B auf die Schichten B ein Faservlies, vorzugsweise aus Glasfasern mit einem Flächengewicht von 20 bis 100 g/m² aufkaschiert sein kann, wodurch die Oberfläche des Halbzeugs und von daraus hergestellten Fertigteilen verbessert wird. Dadurch kann insbesondere ein Lackieren etc. der aus diesem Halbzeug produzierten Fertigteile vermieden werden.

Bei einem bevorzugten Verfahren zur Herstellung des erfindungsgemäßen Halbzeugs wird mindestens eine LFT- Bahn mit mindestens einem Mischfasergewebe oder -gelege kombiniert. Grundsätzlich wäre es auch möglich, statt eines Mischfasergewebes ein einfaches Glasfasergewebe zusammen mit einer Thermoplastfolie nach EP- A 507 322 aufzulaminieren, um den Verstärkungseffekt zu erhalten. Dabei ergäbe sich jedoch - wie oben ausgeführt - keine vollständige und gleichmäßige Durchtränkung der Schicht B.

Bei einem Mischfasergewebe bestehen die Faserstränge sowohl in Längs- als auch in Querrichtung - oder auch nur in Längs- bzw. Querrichtung - aus einer Fasermischung ("Hybridgarn") von Verstärkungsfasern und Thermoplastfasern im Gewichtsverhältnis 80:20 bis 40:60. Das Flächengewicht beträgt 500 bis 2000 g/m². Bei einem Mischfasergelege sind die Mischfaserstränge parallel abgelegt. Bevorzugt werden als Mischfasergewebe TWINTEX- Gewebe der Fa. Vetrotex oder COMFIL- Gewebe der Fa. Johns Manville eingesetzt. Bei diesen bestehen die Faserstränge aus einer Mischung von Glasfasern und Polypropylenfasern im Gewichtsverhältnis 60:40 oder 75:25. Das Flächengewicht der Gewebe beträgt 700 bis 1900 g/m².

Das Laminieren kann diskontinuierlich dadurch erfolgen, dass man mindestens eine vorerwärmte LFT- Schicht mit mindestens einem vorerwärmten Mischfasergewebe bzw. -gelege verpresst.

Bei einem kontinuierlichen Verfahren führt man mindestens eine aus einem Extruder ausgepresste LFT- Bahn direkt mit mindestens einem Mischfasergewebe bzw. -gelege zusammen und verpresst sie heiß. Das Verpressen erfolgt zweckmäßigerweise in einer Doppelbandpresse oder einem Kalander. Falls ein Halbzeug der Schichtenfolge B-A-B hergestellt werden soll, können gleichzeitig noch als Außenschichten Faservliese auflaminiert werden.

Die erfindungsgemäßen Halbzeuge können zur Herstellung von Bauteilen für die Automobil-, Bau- und Möbelindustrie verwendet werden. Dazu wird das Halbzeug bei Temperaturen oberhalb des Erweichungsbereichs des Thermoplasten durch Pressen in einem Werkzeug verformt.

## Patentansprüche

1. Flächiges Halbzeug, mit zumindest einer ersten Schicht A aus einem mit Fasern in unregelmäßiger Verteilung verstärkten, thermoplastischen Kunststoff und einer zweiten Schicht B aus einem mit einem thermoplastischen Kunststoff gleichmäßig durchgetränkten Fasergewebe,
**dadurch gekennzeichnet, dass**
die Verstärkungsfasern der ersten Schicht A
- eine mittlere Länge (Gewichtsmittel) von 5 bis 50 mm, vorzugsweise von 20 bis 30 mm aufweisen,
- zumindest 5 % der Verstärkungsfasern eine Länge von unter 2 mm (Gewichtsmittel) aufweisen,
- zumindest 50 % der Verstärkungsfasern eine Länge von über 2 mm (Gewichtsmittel) aufweisen, und
- höchstens 20 % der Verstärkungsfasern eine Länge von > 50 mm (Gewichtsmittel) aufweisen,
- im wesentlichen in zwei Dimensionen angeordnet sind und
- nicht miteinander mechanisch oder chemisch verbunden sind.

2. Halbzeug nach Anspruch 1, **gekennzeichnet durch** eine Dicke von 2 bis 30 mm und eine Breite von 5 bis 200 cm.

3. Halbzeug nach Anspruch 1 oder 2, umfassend eine Schichtenfolge A-B-A.

4. Halbzeug nach Anspruch 1 oder 2, umfassend eine Schichtenfolge B-A-B.

5. Halbzeug nach Anspruch 4, **dadurch gekennzeichnet, dass** eine der zweiten Schichten B als ein Faservlies aufkaschiert ist.

6. Halbzeug nach einem der vorstehenden Ansprüche, **dadurch gekennzeichnet, dass** der Thermoplast in der ersten Schicht A und der zweiten Schicht B jeweils ein Propylenpolymerisat ist.

7. Halbzeug nach einem der vorstehenden Ansprüche, **dadurch gekennzeichnet, dass** die Verstärkungsfasern Glasfasern sind.

8. Verfahren zur Herstellung des flächigen Halbzeugs nach einem der vorstehenden Ansprüche 1 bis 7, **dadurch gekennzeichnet, dass** zumindest eine vorerwärmte erste Platte A diskontinuierlich mit zumindest einem vorerwärmten Mischfasergewebe oder Mischfasergelege B zusammen verpresst wird.

9. Verfahren zur Herstellung des flächigen Halbzeugs nach einem der vorstehenden Ansprüche 1 bis 7, **dadurch gekennzeichnet, dass** eine zumindest extrudierte erste Bahn A direkt mit einem Mischfasergewebe oder Mischfasergelege B zusammenführt und heiß verpresst wird.

10. Verwendung des Halbzeugs nach einem der vorstehenden Ansprüche 1 bis 7 zur Herstellung von Bauteilen für die Automobil-, Bau- und Möbelindustrie.
